(19) **Europäisches Patentamt European Patent Office Office européen des brevets**

(11) **EP 3 560 685 B1**

(12) **EUROPEAN PATENT SPECIFICATION**

(45) Date of publication and mention of the grant of the patent:
**22.06.2022 Bulletin 2022/25**

(21) Application number: **19154588.8**

(22) Date of filing: **30.01.2019**

(51) International Patent Classification (IPC):
**B22F 10/00** (2021.01)    **B22F 12/00** (2021.01)
**B29C 64/153** (2017.01)    **G03G 9/087** (2006.01)
**B33Y 70/00** (2020.01)    **B29B 9/12** (2006.01)
**B29B 7/90** (2006.01)    **B29B 9/14** (2006.01)
**B29B 9/16** (2006.01)    **B29B 9/06** (2006.01)

(52) Cooperative Patent Classification (CPC):
**B29C 64/153; B29B 7/90; B29B 9/12; B29B 9/14; B29B 9/16; B33Y 70/00;** B29B 9/06; B29B 2009/125; B29B 2009/165; B29B 2009/166; B33Y 30/00

(54) **RESIN PARTICLES FOR FORMING THREE-DIMENSIONAL OBJECT, APPARATUS AND METHOD FOR PRODUCING THREE-DIMENSIONAL OBJECT, AND RESIN PARTICLES**

HARZPARTIKEL ZUR HERSTELLUNG EINES DREIDIMENSIONALEN OBJEKTS, VORRICHTUNG UND VERFAHREN ZUR HERSTELLUNG EINES DREIDIMENSIONALEN OBJEKTS UND HARZPARTIKEL

PARTICULES DE RÉSINE POUR FORMER UN OBJET TRIDIMENSIONNEL, APPAREIL ET PROCÉDÉ DE FABRICATION D'OBJET TRIDIMENSIONNEL ET PARTICULES DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2018 JP 2018049274**
**25.06.2018 JP 2018119566**

(43) Date of publication of application:
**30.10.2019 Bulletin 2019/44**

(73) Proprietor: **Ricoh Company, Ltd.**
**Tokyo 143-8555 (JP)**

(72) Inventors:
 • **Naruse, Mitsuru**
  **Ohta-ku, Tokyo 143-8555 (JP)**
 • **Saito, Akira**
  **Ohta-ku, Tokyo 143-8555 (JP)**
 • **Iwatsuki, Hitoshi**
  **Ohta-ku, Tokyo 143-8555 (JP)**
 • **Higuchi, Shinzo**
  **Ohta-ku, Tokyo 143-8555 (JP)**
 • **Yamashita, Yasuyuki**
  **Ohta-ku, Tokyo 143-8555 (JP)**
 • **Mutoh, Toshiyuki**
  **Ohta-ku, Tokyo 143-8555 (JP)**
 • **Aman, Yasutomo**
  **Ohta-ku, Tokyo 143-8555 (JP)**
 • **Kamoda, Kiichi**
  **Ohta-ku, Tokyo 143-8555 (JP)**
 • **Iida, Sohichiroh**
  **Ohta-ku, Tokyo 143-8555 (JP)**
 • **Iseki, Toshiyuki**
  **Ohta-ku, Tokyo 143-8555 (JP)**

(74) Representative: **Fairbairn, Angus Chisholm et al Marks & Clerk LLP**
 **15 Fetter Lane**
 **London EC4A 1BW (GB)**

(56) References cited:
 **EP-A1- 3 272 787    WO-A1-2017/112723**
 **JP-A- 2013 181 105**

**Description**

BACKGROUND OF THE INVENTION

Field of the Invention

The present disclosure relates to resin particles for forming a three-dimensional object, an apparatus and method for producing a three-dimensional object, and resin particles.

Description of the Related Art

As a method for producing a three-dimensional object, a powder bed fusion (PBF) method has been known. The PBF method is a method where a powder (particles) for forming a three-dimensional object, such as metal, an inorganic material, and a resin is layered, and the molded powder of the powder for a three-dimensional object is welded per layer or per several layers into a set formation pattern by light or a heat source to thereby produce a three-dimensional object.

As the PBF method, a selective laser sintering (SLS) method where selective laser irradiation is performed to form a three-dimensional object and a selective mask sintering (SMS) method where planar application of laser is performed using a mask have been known. Other than the methods mentioned above, moreover, a high speed sintering (HSS) method where irradiation of a heat source is performed using an ink and a binder jetting (BJ) method where a binder component is ejected to form an object, followed by sintering have been known.

Meanwhile, a mixed powder for SLS that is cylindrical particles has been proposed. It is also disclosed that additives, such as filler, are included in a resin (see, for example, International Publication No. WO2017/112723).

Moreover, proposed is to blend aggregation-preventing particles with a thermoplastic resin (for example, see Japanese Unexamined Patent Application Publication No. 2006-321711). EP 3 272 787 A1 discloses a resin powder for solid freeform fabrication comprising a particle having a pillar-like form, wherein a ratio of a height of the particle to a diameter or a long side of a bottom of the particle is 0.5 to 2.0, wherein the particle has a 50 percent cumulative volume particle diameter of from 5 to 200 $\mu$m, and wherein a ratio (Mv/Mn) of a volume average particle diameter (Mv) to a number average particle diameter (Mn) of the particle is 2.00 or less.

SUMMARY OF THE INVENTION

The present disclosure has an object to provide resin particles for forming a three-dimensional object where the resin particles are a material of a three-dimensional object and the resin particles can improve a strength and precision of the three-dimensional object.

Claim 1 defines resin particles for forming a three-dimensional object according to the invention, claim 5 defines the apparatus according to the invention, claim 6 defines the method according to the invention and claim 7 defines alternative resin particles for forming a three-dimensional object according to the invention.

BRIEF DESCRIPTION OF THE DRAWINGS

FIG. 1 is a photograph depicting one example of resin particles for forming a three-dimensional object.
FIG. 2 is a photograph depicting one example of a column.
FIG. 3 is a schematic view illustrating one example of a cut product obtained by cutting a cylindrical resin diagonally.
FIG. 4A is a schematic view illustrating one example of a cylinder.
FIG. 4B is a side view of the cylinder of FIG. 4A.
FIG. 4C is a side view illustrating one example of a cylinder that does not have apexes at edges thereof.
FIG. 4D is a side view illustrating another example of the cylinder that does not have apexes at edges thereof.
FIG. 4E is a side view illustrating another example of the cylinder that does not have apexes at edges thereof.
FIG. 4F is a side view illustrating another example of the cylinder that does not have apexes at edges thereof.
FIG. 4G is a side view illustrating another example of the cylinder that does not have apexes at edges thereof.
FIG. 4H is a side view illustrating another example of the cylinder that does not have apexes at edges thereof.
FIG. 41 is a side view illustrating another example of the cylinder that does not have apexes at edges thereof.

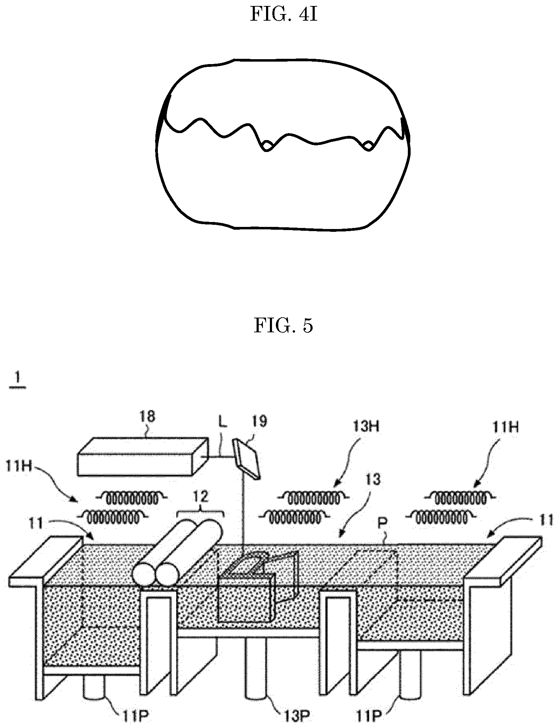

FIG. 5 is a schematic view illustrating an apparatus for producing a three-dimensional object of one aspect of the present disclosure.

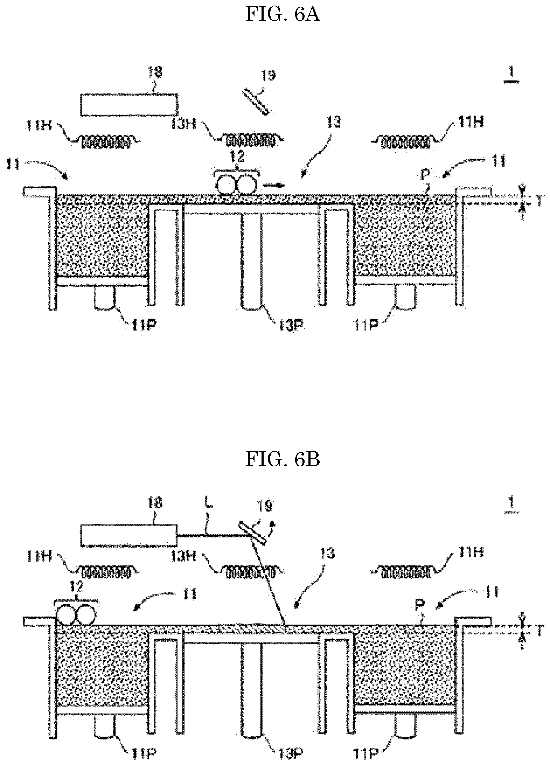

FIG. 6A is a conceptual view describing a method for producing a three-dimensional object.

FIG. 6B is a conceptual view describing the method for producing a three-dimensional object.

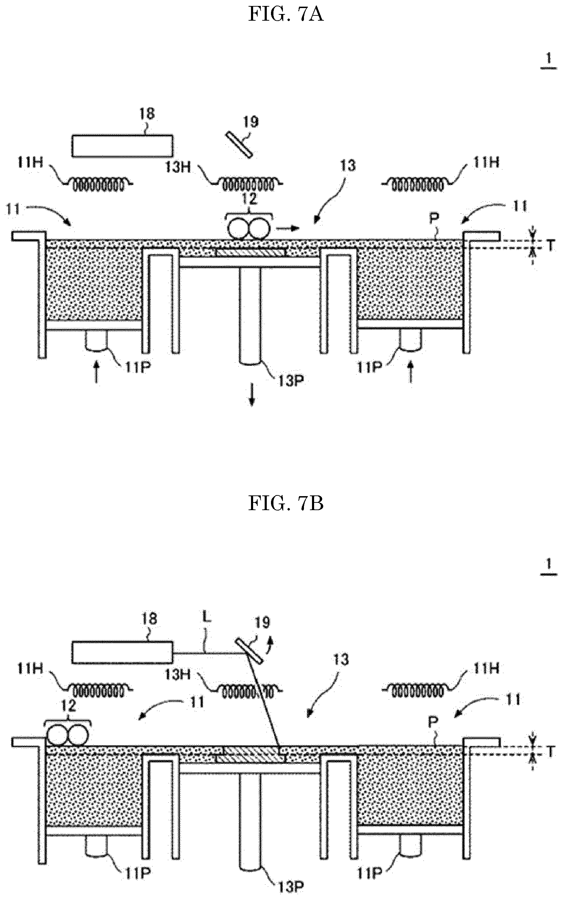

FIG. 7A is a conceptual view describing the method for producing a three-dimensional object.
FIG. 7B is a conceptual view describing the method for producing a three-dimensional object.

DESCRIPTION OF THE EMBODIMENTS

Each of the above-described PBF methods includes a step including melting/fusing laminated powder (particles) for forming a three-dimensional object is melted/fused to form a formed product. For the above-described PBF methods, an adjustment of packing density of the powder for forming a three-dimensional object at the time of laminating is important task.

When the packing density of the powder for forming a three-dimensional object is low, there are many gaps in a formed product and strength of the formed product tends to be low.

The packing density of the powder for forming a three-dimensional object is influenced by shapes of the powder particles or a particle size distribution.

It has been known that a powder material including inorganic filler as a reinforcing agent is used for improving a strength of a formed product.

However, the technologies disclosed in International Publication No. WO2017/112723 and Japanese Unexamined Patent Application Publication No. 2006-321711 above cannot add a sufficient amount of a reinforcing agent to the powder and it is difficult to obtain a narrow particle size distribution.

The technologies disclosed in International Publication No. WO2017/112723 and Japanese Unexamined Patent Application Publication No. 2006-321711 above cannot obtain sufficient strength and precision of a three-dimensional formed product.

The present inventors have confirmed the following points.

A cylindrical powder (particles) for forming a three-dimensional object has a narrow particle size distribution and can increase packing density. In order to produce cylindrical particles, it is necessary to process a resin into fibers or a film. In the case where a large amount of a reinforcing agent that is inorganic filler is added to cylindrical particles, however, fibers or a film is broken during processing and therefore cannot be processed. Accordingly, a large amount of the reinforcing agent cannot be added to a three-dimensional object and a strength of the three-dimensional object cannot be sufficiently increased.

In the case where cylindrical resin particles and inorganic filler particles are mixed and formed, compatibility between the melted resin liquid and the inorganic filler is poor at the time of forming and therefore sufficient strength cannot be obtained.

Meanwhile, non-cylindrical particles obtained by pulverization have a wide particle size distribution and cannot obtain sufficient packing density, and therefore sufficient strength and precision of a three-dimensional object cannot be obtained.

As a result of the researches conducted by the present inventors, the present inventors have found that resin particles for forming a three-dimensional object having the following structure of the resin particles are effective as a material of a three-dimensional formed product where the resin particles can improve a strength and precision of a formed product.

(Resin particles for forming three-dimensional object)

Resin particles for forming a three-dimensional object of the present disclosure are disclosed in claims 1 and 7.

One of the characteristics of the present disclosure is that the inorganic filler content of the first thermoplastic resin particles and the inorganic filler content of the second thermoplastic resin particles are different. A more preferable embodiment is that the inorganic filler content of the first thermoplastic resin particles is smaller than the inorganic filler content of the second thermoplastic resin particles.

An even more preferable embodiment is that the inorganic filler content of the first thermoplastic resin particles is 5% by mass or less and the inorganic filler content of the second thermoplastic resin particles is 10% by mass or greater. Moreover, the inorganic filler content of the second thermoplastic resin particles is even more preferably 30% by mass or greater.

A blending mass ratio between the first thermoplastic resin particles and the second thermoplastic resin particles in the resin particles for forming a three-dimensional object is from 9/1 through 5/5, preferably from 9/1 through 6/4, and more preferably from 8/2 through 7/3.

Moreover, a volume average particle diameter of the second thermoplastic resin particles is preferably smaller than a volume average particle diameter of the first thermoplastic resin particles.

In the present specification, the term "columnar" means a shape of a column. Moreover, any irregular shape that does not have a certain shape, such as a column, is referred to as a non-columnar shape. Note that, a shape of a column will be specifically described below.

The present disclosure will be specifically described hereinafter.

When three-dimensional forming is performed using a resin material for forming a three-dimensional object where the resin material is obtained by pulverizing, such as freeze-pulverization, a resin to which from 10% by mass through 20% by mass of inorganic filler that is a reinforcing agent is added, the following things are expected.

In the case where molding, such as injection molding, is performed, a strength of a three-dimensional object can be increased because a desired amount of the reinforcing filler is included in the formed product. However, a particle size distribution of the resin particles is wide because the resin material for forming a three-dimensional object is produced by pulverization. In the case where molding is performed by the PBF method, a packing ratio is low and the expected strength of the three-dimensional object cannot be obtained.

The present disclosure includes at least two kinds of resin particles, i.e., columnar resin particles (first thermoplastic resin particles) and non-columnar resin particles (second thermoplastic resin particles). The first thermoplastic resin particles and/or second thermoplastic resin particles include inorganic filler that is a reinforcing agent. An inorganic filler content of the first thermoplastic resin particles and an inorganic filler content of the second thermoplastic resin particles are different. At the time of forming according to the PBF method, the first thermoplastic resin particles and the second thermoplastic resin particles are melted and mixed.

A preferable embodiment of the present disclosure is that the inorganic filler content of the first thermoplastic resin particles is smaller than the inorganic filler content of the second thermoplastic resin particles.

A more preferable embodiment thereof is that the first thermoplastic resin particles hardly include inorganic filler or include only a small amount of the inorganic filler, and the second thermoplastic resin particles include a large amount of the inorganic filler. For example, the inorganic filler content of the first thermoplastic resin particles is 5% by mass or less and the inorganic filler content of the second thermoplastic resin particles is 10% by mass or greater.

The first thermoplastic resin particles make the particle size distribution of the entire resin particle small, increase the packing ratio, and increase a strength of a three-dimensional object. Moreover, the first thermoplastic resin particles effectively act on forming of a formed product and can enhance shape precision of the three-dimensional object. Meanwhile, the second thermoplastic resin particles effectively act on increasing a strength of a formed product owing to the filler that is a reinforcing agent.

As a result, a formed product can include columnar resin particles and inorganic filler that is a reinforcing agent, and therefore a strength and precision of a three-dimensional object can be improved.

Moreover, when a resin including filler at a high concentration (30% by mass or greater) is used for the second thermoplastic resin particles, the resin is more easily pulverized compared to a resin having a filler concentration of from 10% by mass through 20% by mass.

As a result, particles having a narrow particle size distribution can be obtained even using a typical pulverization process, such as freeze-pulverization. The second thermoplastic resin particles more preferably include 30% by mass or greater of the filler because the filler hardly impairs a packing degree of the first thermoplastic resin particles and a three-dimensional object of high strength without many gaps can be obtained.

Note that, a three-dimensional object including filler at various concentration can be produced by changing a blending ratio between the first thermoplastic resin particles and the second thermoplastic resin particles, without preparing resin particles, in which an amount of the filler that is a reinforcing agent is changed.

<Particle shape>

Shapes of the first thermoplastic resin particles are important and are columnar shapes.

For example, the columnar shape can be judged on resin particles for forming a three-dimensional object in an SEM image photographed at a magnification of 150 times by SEM (scanning electron microscope JSM-7800FPRIME, available from JEOL Ltd.) in the following manner.

The columnar shape is a shape including a first surface, a second surface, and a side surface, and is a shape where an outer circumferential region of the first surface and an outer circumferential region of the second surface are both extended along the side surface. The shape other than the above-described columnar shape is a non-columnar shape.

When the resin particles have columnar shapes, packing density of the resin particles for forming a three-dimensional object becomes high at the time when the resin particles are laminated using a 3D forming printer, and a formed product having higher strength can be obtained.

Moreover, shapes of the second thermoplastic resin particles are non-columnar shapes.

«Columnar shape»

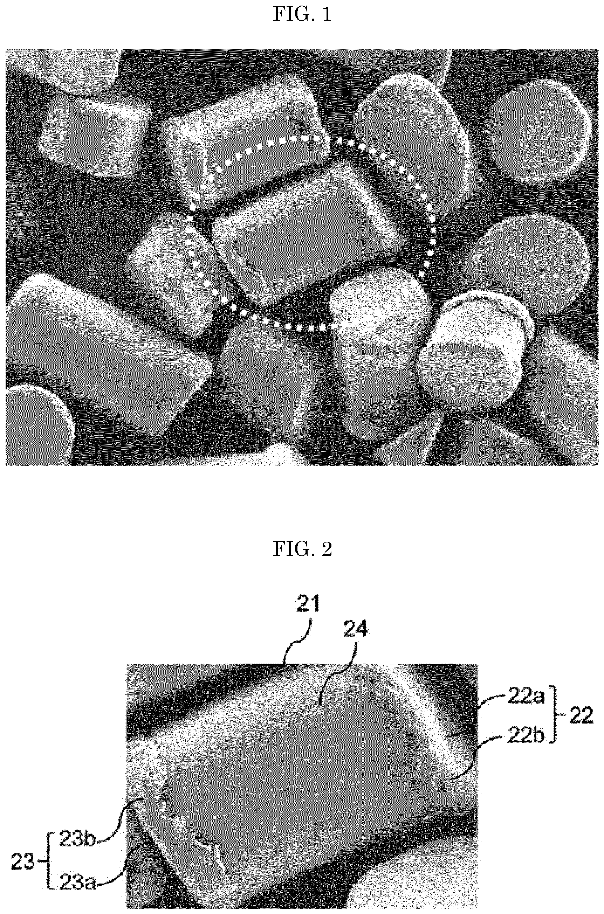

An example of the columnar shape is illustrated in FIGs. 1 and 2.

The resin particle for forming a three-dimensional object surrounded with a dotted line circle in FIG. 1 is one of columns in FIG. 1. FIG. 2 is a photograph depicting one example of a column. Note that, FIGs. 1 and 2 are photographs taken under a scanning electron microscope (SEM).

As illustrated in FIG. 2, a column 21 includes a first surface 22, a second surface 23, and a side surface 24. The first surface 22 includes a first counter surface 22a and an outer circumferential region 22b of the first surface where the outer circumferential region has a shape extending along the side surface 24. The outer circumferential region 22b of the first surface is a surface communicating to the first counter surface 22a via a curved surface and is approximately orthogonal to the first counter surface 22a. The second surface 23 includes a second counter surface 23a facing the first counter surface 22a and an outer circumferential region 23b of the second surface where the outer circumferential region has a shape extending along the side surface 24. The outer circumferential region 23b of the second surface is a surface communication to the second counter surface 23a via the curved surface and is approximately orthogonal to the second counter surface 23a. The side surface 24 is present next to the first surface 22 and the second surface 23. Moreover, the outer circumferential region 22b of the first surface and the outer circumferential region 23b of the second surface are extended onto the side surface 24.

Note that, a shape of the outer circumferential region 22b of the first surface (may be referred to simply as an "outer circumferential region" hereinafter) and a shape of the outer circumferential region 23b of the second surface (may be referred to simply as an "outer circumferential region" hereinafter) are here not particularly limited as long as the shapes are shapes distinguishable from the side surface 24 on an SEM image. Examples of the shapes include a shape where part of the outer circumferential region is integrated with the side surface 24, a shape where the outer circumferential region is in contact with the side surface 24, and a shape where a space is present between the outer circumferential region and the side surface 24. Moreover, the outer circumferential region 22b of the first surface and the outer circumferential region 23b of the second surface are preferably disposed in the manner that planar directions of the outer circumferential region 22b of the first surface and the outer circumferential region 23b of the second surface are identical to the planar direction of the side surface 24.

As illustrated in FIG. 2, the outer circumferential region 22b of the first surface and the outer circumferential region 23b of the second surface are extended along the side surface 24, and are positioned above the side surface 24. Moreover, the characteristic structure of the first surface and the second surface, where near a joint region between the outer circumferential region 22b of the first surface and the side surface 24 and near a joint region between the outer circumferential region 23b and the side surface 24 are covered, is also called a bottle-cap shape.

Note that, in the present disclosure, each of an "outer circumferential region of the first surface" and an "outer circumferential region of the second surface" means a region of a column within a range observed by SEM (scanning electron microscope). Specifically, a region of a column in a range not observed by SEM (scanning electron microscope) is not included in the "outer circumferential region of the first surface" and the "outer circumferential region of the second surface."

In the present disclosure, moreover, the phrase "shape where the outer circumferential region of the first surface extending over the side surface" means a shape where the "entire (with the proviso that it is within a range observed by SEM)" outer circumferential region of the first surface extending over the side surface, and does not include a shape where only part of the outer circumferential region of the first surface is extended over the side surface.

In the present disclosure, moreover, the phrase "shape where the outer circumferential region of the second surface extending over the side surface" means a shape where the "entire (with the proviso that it is within a range observed by SEM)" outer circumferential region of the second surface extending over the side surface, and does not include a shape where only part of the outer circumferential region of the second surface is extended over the side surface.

The outer circumferential region of the first surface and the outer circumferential region of the second surface are each a shape where the first surface or the second surface is extended over the side surface. Therefore, the outer circumferential region of the first surface and the first counter surface are smoothly continued with a curved surface, and the outer circumferential region of the second surface and the second counter surface are smoothly continue with a curved surface. Since a column replaces angular parts with the outer circumferential region of the first surface and the outer circumferential region of the second surface disposed, packing density of the resin particles for forming a three-dimensional object, where the resin particles include the columns, can be enhanced, and tensile strength of a formed product can be improved. Since the column includes angular parts, moreover, flowability of the resin particles for forming a three-dimensional object, where the resin particles include the columns, can be improved. Since a movement failure of the resin particles for forming a three-dimensional object can be suppressed at the time of three-dimensional forming, a tensile strength of a formed product can be improved. Moreover, the column has a shape where the entire outer circumferential region of the first surface and the entire outer circumferential region of the second surface at least in the range observed by SEM (scanning electron microscope) are extended over the side surface. Since the column has the above-described shape, packing density and flowability of the columns necessary for forming a three-dimensional object can be exhibited.

Note that, the length of the shortest part of the outer circumferential region of the first surface or the length of the shortest part of the outer circumferential region relative to the length direction of the column is preferably 1 $\mu$m or greater, more preferably 3 $\mu$m or greater, and even more preferably 5 $\mu$m or greater. When the length is 1 $\mu$m or greater, a curved surface between the outer circumferential region of the first surface and the first counter surface and a curved surface between the outer circumferential region of the second surface and the second counter surface become smoother. Moreover, the resin particles for forming a three-dimensional object including columns can increase packing density, and therefore a tensile strength of a formed product can be improved. When the curved surface becomes smoother, flowability of the resin particles for forming a three-dimensional object including columns can be improved, and a tensile strength of a formed product can be improved because a movement failure of the resin particles for forming a three-dimensional object can be suppressed at the time of three-dimensional forming. Note that, the length of the shortest part of the outer circumferential region of the first surface and the length of the shortest part of the outer circumferential region of the second surface are preferably 10 $\mu$m or greater and more preferably 15 $\mu$m or greater, where the length of the shortest part is a length along a height direction of the column. Note that, the length is a length in a range observed by SEM (scanning electron microscope).

Moreover, a resin powder of appropriate cylinders, for example, has column shapes each having a bottom surface and a top surface, but the column shapes preferably do not have apexes in order to increase the bulk density. The apex is an angular part present in the column.

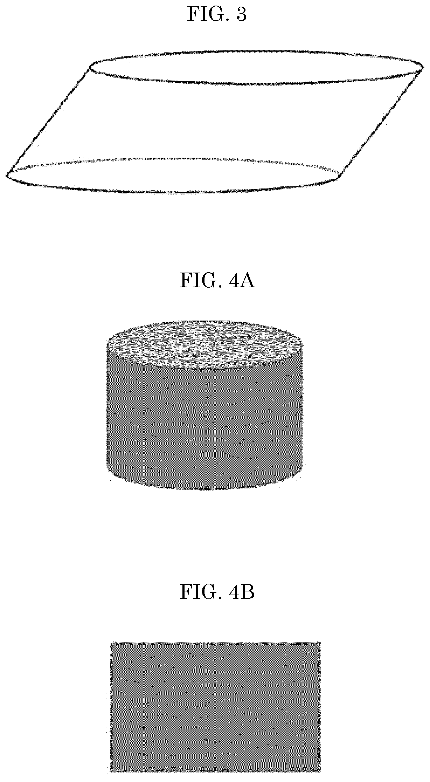

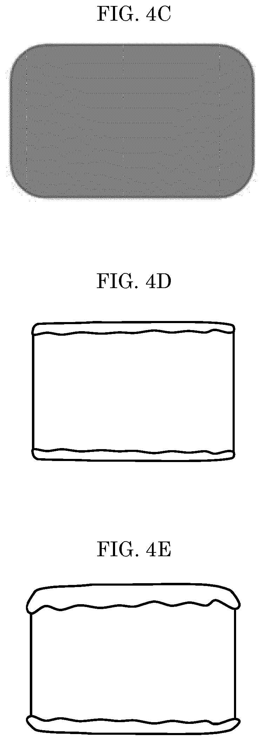

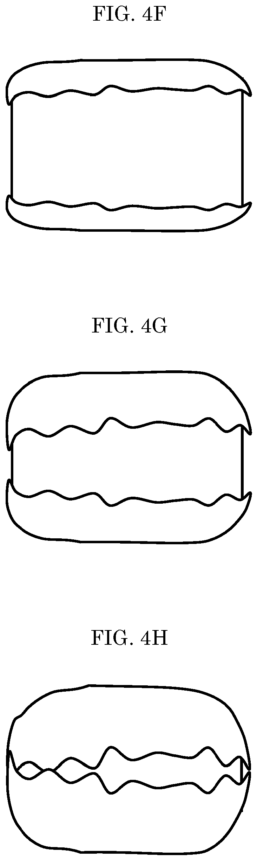

Shapes of the columnar particles are described with reference to FIGs. 4A to 4I. FIG. 4A is a schematic perspective view illustrating one example of a cylinder. FIG. 4B is a side view of the cylinder of FIG. 4A. FIG. 4C is a side view illustrating one example of a cylinder that does not have an apex at an edge thereof. FIGs. 4D to 4I are each a side view illustrating another example of a shape of a cylinder that does not have an apex at an edge thereof.

When the cylinder illustrated in FIG. 4A is observed from the side, the cylinder has a rectangular shape as illustrated in FIG. 4B and has 4 angular parts, i.e., 4 apexes. Examples of a shape of the cylinder that does not have an apex at an edge thereof are FIGs. 4C to 4I. The presence of the apexes of the columnar particles can be confirmed by judging from projected images of sides of the columnar particles. For example, sides of the columnar particles are observed by means of a scanning electron microscope (device name: S4200, available from Hitachi, Ltd.) to obtain a two-dimensional image. In this case, a projected image is a quadrilateral. When each site formed by two sides next to each other is determined as an edge part, the quadrilateral has apexes as angles are formed in the case where the edge part is formed with only two straight lines. In the case where the edge parts are formed with arcs as illustrated in FIGs. 4C to 4I, the quadrilateral does not have apexes at edges thereof.

A shape of the column is not particularly limited and may be appropriately selected depending on the intended purpose. Examples of the shape include three-dimensional shapes, such as an approximate cylinder and an approximate prism. The shape is preferably an approximate prism. Note that, the approximate cylinder and the approximate prism include three-dimensional shapes each including the above-described outer circumferential region of the first surface and the above-described outer circumferential region of the second surface. Note that, a shape of the first counter surface and the shape of the second counter surface of the column are determined by a three-dimensional shape of the column. In the case where a line (angle) along a height direction of the column cannot be observed and a smooth surface is uniformly observed, for example, the column is an approximate cylinder, and shapes of the first counter surface and the second counter surface are approximate circles. In the case where a plurality of planes divided by lines (angles) along the height direction of the column are observed, moreover, the column is an approximate prism and shapes of the first counter surface and the second counter surface are approximate polygons.

The column includes the above-described first counter surface and second counter surface that face each other. The first counter surface may be inclined against the second counter surface, but the first counter surface is preferably approximately parallel to the second counter surface without inclination. Since the first counter surface and the second counter surface are approximately parallel to each other, flowability of the resin particles for forming a three-dimensional object including the columns can be improved.

Moreover, a ratio between the length of the longest straight line drawn on the first counter surface of the second counter surface of the column and the length of the column is preferably 0.5 times or greater but 5.0 times or less, more preferably 0.7 times or greater but 2.0 times or less, and even more preferably 0.8 times or greater but 1.5 times or less.

<Inorganic filler>

Inorganic filler for use in the present disclosure has a volume average particle diameter of from 0.1 $\mu$m through 100 $\mu$m.

The inorganic filler is not particularly limited and may be appropriately selected. Examples of the inorganic filler include inorganic filler disclosed in International Publication No. WO2018/057844, such as alumina, talc, silica, titania, magnesium silicate, mica, glass fibers, glass beads, carbon black, carbon fibers, and aluminium balls. Moreover, a product obtained by performing a surface treatment on any of the above-listed example may also be used.

The above-listed examples may be used alone or in combination.

In view of use of inorganic filler as a reinforcing agent, the inorganic filler is more preferably talc, silica, glass fibers, carbon black, or carbon fibers.

One of the characteristics of the present disclosure is that the inorganic filler content of the first thermoplastic resin particles and the inorganic filler content of the second thermoplastic resin particles are different. A more preferable embodiment is that the inorganic filler content of the first thermoplastic resin particles is smaller than the inorganic filler content of the second thermoplastic resin particles.

As an even more preferable embodiment, the inorganic filler content of the first thermoplastic resin particles is 5% by mass or less and the inorganic filler content of the second thermoplastic resin particles is 10% by mass or greater.

When the inorganic filler content of the first thermoplastic resin particles is 5% by mass or less, columnar rein particles can be suitably produced.

When the inorganic filler content of the second thermoplastic resin particles is 10% by mass or greater, it is possible to form non-columnar particles that can be easily pulverized to make a particle size distribution narrow. As a result, resin particles that can improve a packing ratio of a three-dimensional object can be provided.

Moreover, the inorganic filler content of the second thermoplastic resin particles is more preferably 30% by mass or greater. Moreover, the upper limit of the inorganic filler content of the second thermoplastic resin particles is more preferably 60% by mass or less.

<Blending mass ratio between first thermoplastic resin particles and second thermoplastic resin particles>

A blending mass ratio between the first thermoplastic resin particles and the second thermoplastic resin particles in the resin particles for forming a three-dimensional object is preferably from 9/1 through 5/5.

When the mass ratio of the first thermoplastic resin particles is too large, gaps of a three-dimensional object cannot be filled with the first thermoplastic resin particles and the strength of the three-dimensional object reduces. When the mass ratio of the second thermoplastic resin particles is large, moreover, an excessively melted fluid resin is bled out, and precision of a shape of a three-dimensional object becomes low.

The blending mass ratio between the first thermoplastic resin particles and the second thermoplastic resin particles is more preferably from 9/1 through 6/4, and particularly preferably from 8/2 through 7/3.

<Volume average particle diameters of first thermoplastic resin particles and second thermoplastic resin particles>

A volume average particle diameter Dv ($\mu$m) of the first thermoplastic resin particles and a volume average particle diameter Dv ($\mu$m) of the second thermoplastic resin particles can be measured by measuring the resin particles by means pf a particle size distribution measuring device (microtrac MT3300EXII, available from MicrotracBEL Corp.).

The volume average particle diameter of the second thermoplastic resin particles is more preferably smaller than the volume average particle diameter of the first thermoplastic resin particles because precision and strength of an object improve.

However, the volume average particle diameter of the first thermoplastic resin particles may be identical to the volume average particle diameter of the second thermoplastic resin particles.

The volume average particle diameter of the first thermoplastic resin particles and the volume average particle diameter of the second thermoplastic resin particles are preferably 5 $\mu$m or greater but 200 $\mu$m or less. In view of improvement of precision, moreover, the volume average particle diameter thereof is more preferably 20 $\mu$m or greater but 100 $\mu$m or less. The particles diameters may be set within the above-mentioned range of the volume average particle diameter in a manner that the volume average particle diameter of the first thermoplastic resin particles is to be larger than the volume average particle diameter of the second thermoplastic resin particles.

In view of improvement of precision of forming, moreover, a ratio (Mv/Mn) of the volume average particle diameter to the number average particle diameter of the resin particles is preferably 2.00 or less, more preferably 1.50 or less, and particularly preferably 1.20 or less.

<Thermoplastic resin used for first thermoplastic resin particles and second thermoplastic resin particles>

A thermoplastic resin means a resin that is plasticized and melted upon application of heat.

The thermoplastic resin for use in the present disclosure is not particularly limited. For example, the thermoplastic resin is preferably a crystalline resin and a liquid crystal resin (LCP). A particularly preferable thermoplastic resin is a resin having a large difference between a melting onset temperature thereof and a recrystallization point thereof at the time of cooling.

Examples of the crystalline resin include polymers, such as polyolefin, polyamide, polyester, polyether, polyphenylene sulfide, polyacetal, and thermoplastic polyimide.

The above-listed examples may be used alone or in combination.

It is more preferable that the same resin be used for the first thermoplastic resin particles and the second thermoplastic resin particles, the same resin.

Examples of the polyolefin include polyethylene and polypropylene (PP, melting point: 180°C).

Examples of the polyamide include: polyamides such as polyamide 410 (PA410), polyamide 6 (PA6), polyamide 66 (PA66, melting point: 265°C), polyamide 610 (PA610), polyamide 612 (PA612), polyamide 11 (PA11), and polyamide 12 (PA12); and semi-aromatic polyamides such as polyamide 4T (PA4T), polyamide MXD6 (PAMXD6), polyamide 6T (PA6T), polyamide 9T (PA9T, melting point: 300°C), and polyamide 10T (PA10T). Among the above-listed examples, PA9T is called polynonamethylene terephthalamide and is called semi-aromatic because PA9T is made up of diamine having 9 carbon atoms and a terephthalic acid monomer and the side of the carboxylic acid is generally aromatic. As wholly aromatic polyamide in which the side of diamine is also aromatic, moreover, so-called aramid formed of p-phenylenediamine and terephthalic acid monomer is also included in the polyamide of the present disclosure.

Examples of the polyester include polyethylene terephthalate (PET, melting point: 260°C), polybutadiene terephthalate (PBT, melting point: 218°C), and polylactic acid (PLA). In order to impart heat resistance, polyester including an aromatic ring to which terephthalic acid or isophthalic acid are partially added may be suitably used in the present disclosure.

Examples of the polyether include polyether ether ketone (PEEK, melting point: 343°C), polyether ketone (PEK), polyether ketone (PEKK), polyaryl ether ketone (PAEK), polyether ether ketone (PEEKK), and polyether ketone ether ketone (PEKEKK). The resin may be any resin other than the above-mentioned polyether, as long as the resin is a crystalline polymer. Examples of such resins include polyacetal, polyimide, and polyether sulfone. A resin having two melting points, such as PA9T, may be used as the resin.

«Crystallinity of thermoplastic resin particles»

As described above, a crystalline resin may be used as the thermoplastic resin. The crystalline resin is a resin having a melting peak when the resin is measured according to ISO 3146 (plastic transition temperature measuring method, JIS K7121).

As the crystalline resin, a crystalline thermoplastic resin whose crystallinity is controlled is preferable, and a crystalline thermoplastic resin whose size of crystals or alignment of crystals is controlled by a heat treatment, stretching, a crystal nucleating agent, or a method of external additive, such as an ultrasonic wave treatment, is more preferable.

A production method of the crystalline thermoplastic resin is not particularly limited and may be appropriately selected depending on the intended purpose. Examples of the production method include: an annealing treatment where heating is performed at a temperature equal to or higher than a glass transition temperature of the resin to increase crystallinity; and a method where, after the annealing, a crystal nucleating agent is added to increase crystallinity and an annealing treatment is performed to further increase crystallinity. Other examples include: a method where ultrasonic waves are applied to increase crystallinity; and a method where the resin is dissolved slowly in a solvent to increase crystallinity. Furthermore, other examples include a method where a highly aligned and highly crystallized resin formed through growth of crystal by externally applying electric field, or through stretching is pulverized or cut.

The annealing can be performed by heating the resin at a temperature higher than a glass transition temperature of the resin by 50°C for 3 days, followed by slowly cooling to a room temperature.

As the stretching, the resin solution is stretched into fibers by means of an extrusion cutting device with stirring at a temperature higher than a melting point by 30°C or greater. At the time of stretching, the solution is stretched into fibers in about 1-fold or greater but about 10-fold or less. The maximum stretching ratio can be changed depending on melt viscosity of the resin.

The application of ultrasonic waves can be performed by adding a glycerin (available from Tokyo Chemical Industry Co., Ltd., reagent grade) solvent to the resin in about 5-fold, heating the resultant to a temperature higher than a melting point of the resin by 20°C, and applying ultrasonic waves at 24 kHz and amplitude of 60% for 2 hours by means of an ultrasonic wave generator (ultrasonicator UP200S, available from Hielscher Ultrasonics GmbH). Thereafter, it is preferable that washing be performed with a solvent of isopropanol at room temperature, and the resultant be vacuum dried.

The external application of an electric field can be performed by heating the resin at a temperature equal to or higher than a glass transition temperature, then applying alternating electric field (500 Hz) of 600 V/cm for 1 hour, followed by slowly cooling.

When the resin particles are used as resin particles for forming a three-dimensional object, a large temperature width (temperature window) of a crystal phase change is preferable, for example, in the PBF method, because splash back can be prevented at the time of production of a three-dimensional object. In view of the crystal phase change, the resin powder having the larger difference between a melting onset temperature and a recrystallization point at the time of cooling is more preferable because formability is improved.

<Other additives>

Other additives may be added inside the resin particles or added to the resin particles according to the necessity as long as the additives may not impart an effect obtainable by the present disclosure. Examples of the additives include a flame retardant, a plasticizer, thermal stabilizer additives, a crystal nucleating agent, and polymer particles of an amorphous resin etc.

<Method for producing resin particles for forming three-dimensional object>

The resin particles for forming a three-dimensional object of the present disclosure can be obtained by producing each of the first thermoplastic resin particles and the second thermoplastic resin particles, followed by mixing the first thermoplastic resin particles and the second thermoplastic resin particles.
The mixing can be performed by any of methods known in the art, such as use of a mixer or a shaker.
The first thermoplastic resin particles and the second thermoplastic resin particles may be produced by processing a commercially available resin into particles according to any of methods known in the art. Examples of the methods include: a method where resin pellets or powder is pulverized in an environment of room temperature or a freezing temperature; an atomizing method where a resin is melted, followed by ejecting the melted resin; and a suspension method.
The obtained particles may be classified to obtain a target particle size and particle size distribution.
As a method for obtaining the columnar first thermoplastic resin particles, a method for directly cutting resin fibers to obtain approximate cylinders or cuboids, a method for obtaining cuboids or cubes from a film, or a method where, after producing cuboid particles, post processing is performed on the obtained cuboid particles to obtain columnar particles, such as approximate cylinders may be used.
Among the above-listed methods, a method for cutting resin fibers to obtain columnar particles is preferable.
Examples of the method for producing resin fibers include a method where a resin solution for forming a three-dimensional object is stretched with sintering at a temperature higher than a melting point of the resin by 30°C or greater by means of an extrusion processing device.
At the time the resin fibers are produced, the resin solution for forming a three-dimensional object is stretched into fibers in about 1-fold or greater but about 10-fold or less. At the time of stretching, a shape of a cross-sectional surface of a fiber can be determined by a shape of a nozzle opening of the extrusion processing device. In the present disclosure, the cross-section is circular shape, the nozzle opening is preferably a circular shape. The size precision is preferably as high as possible. The size precision is preferably at least within 10% of a radius of the circular shape of the surface part. The number of openings of the nozzle is preferably as many as possible in view of productivity.
For the cutting, a guillotine system where a cutting device in which both an upper blade and a bottom blade are knives is used, or a press cut system where a cutting device configured to cut using an upper blade and a plate disposed at the bottom side without disposing a blade at the bottom side may be used. Examples of the cutting method include: a method where the resin fibers are directly cut into the size of 0.005 mm or greater but 0.2 mm or less using the above-mentioned device; and a method where cutting is performed by $CO_2$ laser. According to any of the above-mentioned methods, columnar first thermoplastic resin particles can be obtained.

<Use of resin particles for forming three-dimensional object>

The resin particles for forming a three-dimensional object of the present disclosure have desirably balanced parameters, such as a particle size, a particle size distribution, heat transfer characteristics, melt viscosity, bulk density, flowability, a melting temperature, and a recrystallization temperature. Accordingly, the resin particles for forming a three-dimensional object can be suitably used various three-dimensional forming methods using resin powders, such as an SLS method, an SMS method, a HSS method, a multi jet fusion (MJF) method, and a BJ method.

(Apparatus and method for producing three-dimensional object)

An apparatus for producing a three-dimensional object of the present disclosure is a device configured to use the above-described resin particles for forming a three-dimensional object of the present disclosure and laminate cured layers of the resin particles for forming a three-dimensional object to form a three-dimensional object.
A method for producing a three-dimensional object of the present disclosure is a method including using the above-described resin particles for forming a three-dimensional object of the present disclosure and laminating cured layers of the resin particles for forming a three-dimensional object to form a three-dimensional object.
The apparatus for producing a three-dimensional object of the present disclosure includes a supply unit of resin particles for forming a three-dimensional object where the supply unit is configured to supply the above-described resin particles for forming a three-dimensional object of the present disclosure.

Since the apparatus for producing a three-dimensional object of the present disclosure is synonymous to carry out the method for producing a three-dimensional object of the present disclosure, the details of the production method of the present disclosure will be made clear through descriptions of the production apparatus of the present disclosure.

For example, the apparatus for producing a three-dimensional object of the present disclosure includes, as a unit for forming a three-dimensional object, a layer forming unit configured to form a layer including the resin particles for forming a three-dimensional object, and a melting unit configured to irradiate the layer with electromagnetic waves to melt the layer. The apparatus for producing a three-dimensional object of the present disclosure may further include other units according to the necessity.

Examples of the layer forming unit include a roller, a blade, a brush, and a combination of any of the above-listed units.

Examples of an electromagnetic wave source serving as the melting unit include a $CO_2$ laser, an infrared ray source, a microwave generator, a radiation heater, a LED lamp, and a combination of any of the above-listed units.

The apparatus for producing a three-dimensional object using the above-described resin particles for forming a three-dimensional object will be described with reference to FIG. 5. FIG. 5 is a schematic view illustrating an apparatus for producing a three-dimensional object according to one aspect of the present disclosure.

As illustrated in FIG. 5, a forming device 1 includes a supply tank 11 as one example of a storing unit configured to store resin particles for forming P, a roller 12 configured to supply the resin particles P stored in the supply tank 11, a laser scanning space 13 in which the resin particles P supplied by the roller 12 is arranged and laser L is scanned, an electromagnetic source 18 that is an irradiation source of laser L serving as electromagnetic radiations, and a reflector 19 configured to reflect laser L emitted from the electromagnetic source 18 to a predetermined position in the laser scanning space 13. Moreover, the forming device 1 includes heaters 11H and 13H configured to heat the supply tank 11 and the resin particles P stored in the laser scanning space 13, respectively.

A reflective surface of the reflector 19 moves based on two-dimensional date of a three-dimensional (3D) model when the electromagnetic source 18 emits laser L. The two-dimensional data of the 3D model gives each cross-sectional shape when the 3D model is sliced at a certain gap. Laser L is selectively emitted to the area indicated by the two-dimensional data within the laser scanning space 13 by changing the reflection angle of the laser L. The resin particles at the laser L irradiation position are melted and sintered to form a layer. Specifically, the electromagnetic source 18 functions as a layer forming unit configured to form each layer of a formed product from the resin particles P.

Moreover, pistons 11P and 13P are respectively disposed in the supply tank 11 and laser scanning space 13 of the forming device 1. When the formation of the layer is completed, the pistons 11P and 13P move in a manner that the supply tank 11 and the laser scanning space 13 are moved up and down in the laminating direction of the formed product. As a result, the fresh resin particles P to be used for formation of a new layer can be supplied from the supply tank 11 to the laser scanning space 13.

The forming device 1 selectively melts the resin particles P with changing an irradiation position of laser by the reflector 19, but the present disclosure is not limited to such an embodiment. The resin powder of the present disclosure is also suitably used for a forming device of a selective mask sintering (SMS) method. In the SMS method, for example, part of the resin particles is masked with a shielding mask and electromagnetic irradiation is performed to apply electromagnetic radiations, such as infrared rays, to the area not covered with the mask to thereby selectively melt the resin particles to perform forming. In the case where the SMS method is used, the resin particles P preferably include one or more kinds of a heat absorbent or dark substance to increase infrared absorbing properties. Examples of the heat absorbent and dark substance include carbon fibers, carbon black, carbon nanotubes, and cellulose nanofibers. As the SMS method, for example, the method disclosed in US Patent No. 6,531,086 can be suitably used.

Next, an embodiment of the method for producing a three-dimensional object of the present disclosure will be described with reference to FIGs. 6 to 7.

FIGs. 6A, 6B, 7A, and 7B are conceptual views for describing a method for producing a three-dimensional object.

The resin powder P stored in the supply tank 11 is heated by the heater 11H. A temperature of the supply tank 11 is preferably as high as possible but equal to or below a melting point of the resin particles P in view of inhibition of splash back at the time of melting the resin particles P by laser irradiation. In view of prevention of melting of the resin powder P in the supply tank 11, however, the temperature of the supply tank 11 is preferably a temperature lower than the melting point of the resin particles P by 10°C or greater. As illustrated in FIG. 6A, an engine of the forming device 1 drives the roller 12 to supply and level the resin powder P of the supply tank 11 into the laser scanning space 13 to form a particle layer having a thickness T for one layer, as one example of the supplying step. The resin particles P supplied to the laser scanning space 13 are heated by the heater 13H. The temperature of the laser scanning space 13 is preferably as high as possible in view of inhibition of splash back at the time of melting the resin particles P by laser irradiation. In view of prevention of melting of the resin particles P in the laser scanning space 13, however, the temperature of the laser scanning space 13 is preferably a temperature lower than the melting point of the resin particles P by 5°C or greater.

The engine of the forming device 1 receives a plurality of inputs of two-dimensional data generated from a 3D model. As illustrated in FIG. 6B, the engine of the forming device 1 applies laser from the electromagnetic source 18 with moving a reflection surface of the reflector 19 based on the two-dimensional data at the most bottom surface side among plurality of the two-dimensional data. The output of laser is not particularly limited and may be appropriately selected depending on the intended purpose. The output is preferably 10 W or greater but 150 W or less. As a result of the laser irradiation, the position of the resin particles P corresponding to the pixels designated by the two-dimensional data at the most bottom surface side is melted within the particle layer. Once the laser irradiation is completed, the melted resin is cured, and a sintered layer in the shape designated by the two-dimensional data at the most bottom surface side is formed.

A thickness T of the sintered layer is not particularly limited. An average value of the thickness T is preferably 10 µm or greater, more preferably 50 µm or greater, and even more preferably 100 µm or greater. Moreover, the thickness T of the sintered layer is not particularly limited, but the average value of the thickness T is preferably less than 200 µm, more preferably less than 150 µm, and even more preferably less than 120 µm.

As illustrated in FIG. 7A, once the sintered layer at the most bottom surface side is formed, the engine of the forming device 1 drops the laser scanning space 13 by the thickness T for one layer with the piston 13P to form a forming space of a thickness T for one layer in the laser scanning space 13. Moreover, the engine of the forming device 1 lifts the piston 11P to be able to supply fresh resin particles P. Subsequently, the engine of the forming device 1 drives the roller 12 to supply and level the resin particles P of the supply tank 11 in the laser scanning space 13 to form a particle layer having the thickness T for one layer, as illustrated in FIG. 7A.

As illustrated in FIG. 7B, the engine of the forming device 1 applies laser from the electromagnetic source 18 with moving the reflective surface of the reflector 19 based on the two-dimensional data of the second layer from the most bottom surface side among the plurality of two-dimensional data. As a result, the position of the resin particles P corresponding to the pixels designated by the two-dimensional data of the second layer from the most bottom surface side is melted within the particle layer. Once the laser irradiation is completed, the melted resin is cured, and a sintered layer in the shape designated by the two-dimensional data of the second layer from the most bottom surface side is formed in the state where the sintered layer is laminated on the sintered layer at the most bottom surface side.

The forming device 1 repeats the above-described supplying step and layer-forming step to laminate sintered layers. As the sintered formed layers are laminated to complete forming based on all of the plurality of two-dimensional data, a three-dimensional object having an identical shape to the shape of the 3D model can be obtained.

<Three-dimensional object>

A three-dimensional object is suitably produced by the method for producing a three-dimensional object of the present disclosure.

<Applicable fields of resin particles>

The resin particles for forming a three-dimensional object for use in the present embodiment are not only for forming a three-dimensional object, but also applicable as resin particles used in various fields.

For example, the resin particles of the present disclosure can be used for surface contraction agents, spacers, lubricants, paints, grind stone, additives, secondary battery cell separators, food products, cosmetic products, or clothes. Moreover, the resin particles of the present disclosure can be also used as a material or a metal substitute material used in fields of automobiles, precision equipment, semiconductors, aerospace, and medicines.

Examples

The present disclosure will be described below by way of Examples. The present disclosure should not be construed as being limited to these Examples.

(Example 1)

<Production of first thermoplastic resin particles (may be referred to as first particles)>

After stirring a polybutylene terephthalate (PBT) resin (product name: Novaduran5010R5, available from Mitsubishi Engineering-Plastics Corporation) at a temperature higher than the melting point of the resin by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 µm by stretching in 4-fold. Thereafter, the formed fibers are arranged in the same direction, and pressure of 10 MPa was applied to the fibers with heating at a temperature lower than the melting point by 50°C to integrate the fibers into a sheet. Note that, a cross-sectional shape of each of fibers integrated into the sheet was an approximate polygon. Moreover, the fibers integrated into the sheet was cut by means of a press-cut cutting device (NJ series 1200, available from OGINO SEIKI CO., LTD.) with adjusting a cut width to 50 $\mu$m and cut speed to 280 spm (shots per minute). In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 1). The volume average particle diameter of the first particles was 80 $\mu$m.

<Production of second thermoplastic resin particles (may be referred to as second particles hereinafter)>

A polybutylene terephthalate (PBT) resin including 15% of GF (product name: Novaduran5010G15, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles.

In the present specification, GF means glass fibers.

The obtained resin particles were ground to obtain a particle size width of 5 $\mu$m or greater but 200 $\mu$m or smaller, to thereby obtain second particles (Example 1). The volume average particle diameter of the second particles was 80 $\mu$m.

<Production of resin particles for forming three-dimensional object>

By means of Turbula Mixer (available from SHINMARU ENTERPRISES CORPORATION), 5 kg of the first particles (Example 1) and 5 kg of the second particles (Example 1) were mixed for 30 minutes, to thereby obtain resin particles for forming a three-dimensional object (Example 1).

(Example 2)

<Production of first particles (Example 2)>

After sintering a polybutylene terephthalate (PBT) resin (product name: Novaduran5010R5, available from Mitsubishi Engineering-Plastics Corporation) at a temperature higher than the melting point of PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 $\mu$m by stretching in 4-fold. Thereafter, the formed fibers are disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 $\mu$m and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 2). The volume average particle diameter of the first particles was 80 $\mu$m.

<Production of second particles (Example 2)>

A polybutylene terephthalate (PBT) resin including 15% of GF (product name: Novaduran5010G15, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles. The obtained resin particles were ground to obtain a particle size width of 5 $\mu$m or greater but 200 $\mu$m or smaller, to thereby obtain second particles (Example 2). The volume average particle diameter of the second particles was 80 $\mu$m.

<Production of particles for forming three-dimensional object>

By means of Turbula Mixer (available from SHINMARU ENTERPRISES CORPORATION), 6 kg of the first particles (Example 2) and 4 kg of the second particles (Example 2) were mixed for 30 minutes, to thereby obtain resin particles for forming a three-dimensional object (Example 2).

(Example 3)

<Production of first particles (Example 3)>

After sintering a polybutylene terephthalate (PBT) resin (product name: Novaduran5010R5, available from Mitsubishi Engineering-Plastics Corporation) at a temperature higher than the melting point of PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 $\mu$m by stretching in 4-fold. Thereafter, the formed fibers were disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 $\mu$m and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 3). The volume average particle diameter of the first particles was 80 $\mu$m.

<Production of second particles (Example 3)>

A polybutylene terephthalate (PBT) resin including 30% of GF (product name: Novaduran5010G30, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles. The obtained resin particles were ground to obtain a particle size width of 5 $\mu$m or greater but 200 $\mu$m or smaller, to thereby obtain second particles (Example 3). The volume average particle diameter of the second particles was 80 $\mu$m.

<Production of particles for forming three-dimensional object>

By means of Turbula Mixer (available from SHINMARU ENTERPRISES CORPORATION), 6 kg of the first particles (Example 3) and 4 kg of the second particles (Example 3) were mixed for 30 minutes, to thereby obtain particles for forming three-dimensional objects (Example 3).

(Example 4)

<Production of first particles (Example 4)>

After sintering a polybutylene terephthalate (PBT) resin (product name: Novaduran5010R5, available from Mitsubishi Engineering-Plastics Corporation) at a temperature higher than the melting point of PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 $\mu$m by stretching in 4-fold. Thereafter, the formed fibers are disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 $\mu$m and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 4). The volume average particle diameter of the first particles was 80 $\mu$m.

<Production of second particles (Example 4)>

A polybutylene terephthalate (PBT) resin including 45% of GF (product name: Novaduran5010G45, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles. The obtained resin particles were ground to obtain a particle size width of 5 $\mu$m or greater but 200 $\mu$m or smaller, to thereby obtain second particles (Example 4). The volume average particle diameter of the second particles was 80 μm.

<Production of particles for forming three-dimensional object>

By means of Turbula Mixer (available from SHINMARU ENTERPRISES CORPORATION), 6 kg of the first particles (Example 4) and 4 kg of the second particles (Example 4) were mixed for 30 minutes, to thereby obtain particles for forming a three-dimensional object (Example 4).

(Example 5)

<Production of first particles (Example 5)>

A polybutylene terephthalate (PBT) resin (product name: Novaduran5010R5, available from Mitsubishi Engineering-Plastics Corporation, melting point: 218°C) and a polybutylene terephthalate (PBT) resin including 15% of GF (product name: Novaduran5010G15, available from Mitsubishi Engineering-Plastics Corporation, melting point: 218°C) were mixed at a ratio of 3:1 for 30 minutes by means of Turbula Mixer (available from SHINMARU ENTERPRISES CORPORATION). Thereafter, melting, kneading, and pelletizing were performed at a temperature higher than the melting point by 30°C by means of a table-top kneading extrusion micropelletizer 1AEC (available from Imoto Machinery Co., Ltd.), to thereby produce PBT pellets.

After sintering the pellets at a temperature higher than the melting point of the PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 μm by stretching in 4-fold. Thereafter, the formed fibers were disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 μm and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 5). The volume average particle diameter of the first particles was 80 μm.

<Production of second particles (Example 5)>

A polybutylene terephthalate (PBT) resin including 45% of GF (product name: Novaduran5010G45, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles. The obtained resin particles were ground to obtain a particle size width of 5 μm or greater but 200 μm or smaller, to thereby obtain second particles (Example 5). The volume average particle diameter of the second particles was 80 μm.

<Production of particles for forming three-dimensional object>

By means of Turbula Mixer (available from SHINMARU ENTERPRISES CORPORATION), 7 kg of the first particles (Example 5) and 3 kg of the second particles (Example 5) were mixed for 30 minutes, to thereby obtain particles for forming a three-dimensional object (Example 5).

(Example 6)

<Production of first particles (Example 6)>

A polybutylene terephthalate (PBT) resin (product name: Novaduran5010R5, available from Mitsubishi Engineering-Plastics Corporation, melting point: 218°C) and a polybutylene terephthalate (PBT) resin including 15% of GF (product name: Novaduran5010G15, available from Mitsubishi Engineering-Plastics Corporation, melting point: 218°C) were mixed at a ratio of 3:1 for 30 minutes by means of Turbula Mixer (available from SHINMARU ENTERPRISES CORPORATION). Thereafter, melting, kneading, and pelletizing were performed at a temperature higher than the melting point by 30°C by means of a table-top kneading extrusion micropelletizer 1AEC (available from Imoto Machinery Co., Ltd.), to thereby produce PBT pellets.

After sintering the pellets at a temperature higher than the melting point of the PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 μm by stretching in 4-fold. Thereafter, the formed fibers were disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 μm and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 6). The volume average particle diameter of the first particles was 80 μm.

<Production of second particles (Example 6)>

A polybutylene terephthalate (PBT) resin including 45% of GF (product name: Novaduran5010G45, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles. The obtained resin particles were ground to obtain a particle size width of 5 μm or greater but 200 μm or smaller, to thereby obtain second particles (Example 6). The volume average particle diameter of the second particles was 80 μm.

<Production of particles for forming three-dimensional object>

By means of Turbula Mixer (available from SHINMARU ENTERPRISES CORPORATION), 8 kg of the first particles (Example 6) and 2 kg of the second particles (Example 6) were mixed for 30 minutes, to thereby obtain resins for forming a three-dimensional object (Example 6).

(Example 7)

<Production of first particles (Example 7)>

A polybutylene terephthalate (PBT) resin (product name: Novaduran5010R5, available from Mitsubishi Engineering-Plastics Corporation, melting point: 218°C) and a polybutylene terephthalate (PBT) resin including 15% of GF (product name: Novaduran5010G15, available from Mitsubishi Engineering-Plastics Corporation, melting point: 218°C) were mixed at a ratio of 3:1 for 30 minutes by means of Turbula Mixer (available from SHINMARU ENTERPRISES CORPORATION). Thereafter, melting, kneading, and pelletizing were performed at a temperature higher than the melting point by 30°C by means of a table-top kneading extrusion micropelletizer 1AEC (available from Imoto Machinery Co., Ltd.), to thereby produce PBT pellets.

After sintering the pellets at a temperature higher than the melting point of the PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 μm by stretching in 4-fold. Thereafter, the formed fibers were disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 μm and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 7). The volume average particle diameter of the first particles was 80 μm.

<Production of second particles (Example 7)>

A polybutylene terephthalate (PBT) resin including 45% of GF (product name: Novaduran5010G45, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles for forming a three-dimensional object. The obtained resin particles for forming a three-dimensional object were ground to obtain a particle size width of 5 $\mu$m or greater but 200 $\mu$m or smaller, to thereby obtain second particles (Example 7). The volume average particle diameter of the second particles was 80 $\mu$m.

<Production of particles for forming three-dimensional object>

By means of Turbula Mixer (available from SHINMARU ENTERPRISES CORPORATION), 9 kg of the first particles (Example 7) and 1 kg of the second particles (Example 7) were mixed for 30 minutes, to thereby obtain particles for forming a three-dimensional object (Example 7).

(Example 8)

<Production of first particles (Example 8)>

After sintering a polybutylene terephthalate (PBT) resin (product name: Novaduran5010R5, available from Mitsubishi Engineering-Plastics Corporation) at a temperature higher than the melting point of PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 $\mu$m by stretching in 4-fold. Thereafter, the formed fibers were disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 $\mu$m and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Example 8). The volume average particle diameter of the first particles was 80 $\mu$m.

<Production of second particles (Example 8)>

A polybutylene terephthalate (PBT) resin including 45% of GF (product name: Novaduran5010G45, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles. The obtained resin particles were ground to obtain a particle size width of 5 $\mu$m or greater but 100 $\mu$m or smaller, to thereby obtain second particles (Example 8). The volume average particle diameter of the second particles was 40 $\mu$m.

<Production of particles for forming three-dimensional object (Example 8)>

By means of Turbula Mixer (available from SHINMARU ENTERPRISES CORPORATION), 6 kg of the first particles (Example 8) and 4 kg of the second particles (Example 8) were mixed for 30 minutes, to thereby obtain particles for forming a three-dimensional object (Example 8).

(Comparative Example 1)

<Production of first particles (Comparative Example 1)>

First particles were not used in Comparative Example 1.

<Production of second particles (Comparative Example 1)>

A polybutylene terephthalate (PBT) resin including 15% of GF (product name: Novaduran5010G15, available from Mitsubishi Engineering-Plastics Corporation, melting point: 218°C) was frozen and pulverized by means of a low temperature pulverization system (device name: LINREX MILL LX1, available from HOSOKAWA MICRON CORPORATION) at -200°C, to thereby obtain resin particles for forming a three-dimensional object. The obtained resin particles for forming a three-dimensional object were ground to obtain a particle size width of 5 $\mu$m or greater but 200 $\mu$m or smaller, to thereby obtain second particles (Comparative Example 1). The volume average particle diameter of the second particles was 40 $\mu$m.

<Production of particles for forming three-dimensional object (Comparative Example 1)>

The second particles (Comparative Example 1) in an amount of 10.0 kg were used as resin particles for forming a three-dimensional object (Comparative Example 1).

(Comparative Example 2)

<Production of first particles (Comparative Example 2)>

After sintering a polybutylene terephthalate (PBT) resin (product name: Novaduran5010R5, available from Mitsubishi Engineering-Plastics Corporation) at a temperature higher than the melting point of PBT by 30°C, a resin solution for forming a three-dimensional object was stretched into fibers by means of an extrusion device having a circular nozzle opening shape (available from The Japan Steel Works, LTD.). The fibers were adjusted to have a fiber diameter (diameter) of 55 $\mu$m by stretching in 4-fold. Thereafter, the formed fibers are disposed with aligning with the same direction, and pressure of 10 MPa was applied with heating at a temperature lower than a melting point of the resin by 50°C to integrate into a sheet. Note that, a cross-sectional shape of each fiber integrated into the sheet was an approximate polygon. Moreover, the fibers integrated into the sheet were cut by means of a press-cut cutting device (NL series 1200, available from OGINO SEIKI CO., LTD.) with adjusting a cut width to 50 $\mu$m and cut speed to 280 spm. In order to melt the surfaces of the cut products by mechanical frictions, thereafter, the obtained cut products were processed by means of a multiple purpose mixer (available from NIPPON COKE & ENGINEERING CO., LTD.) for 20 minutes at the rotational speed of 9,000 rpm, to thereby obtain first particles (Comparative Example 2). The volume average particle diameter of the first particles was 80 $\mu$m.

<Production of second particles (Comparative Example 2)>

Glass fibers SS-05C-404 (available from Nitto Boseki Co., Ltd., cut length: 0.1 mm) were used as second particles (Comparative Example 2). Note that, a resin was not included in the second particles.

<Production of particles for forming three-dimensional object (Comparative Example 2)>

By means of Turbula Mixer (available from SHINMARU ENTERPRISES CORPORATION), 8.5 kg of the first particles (Comparative Example 2) and 1.5 kg of the second particles (Comparative Example 2) were mixed for 30 minutes, to thereby obtain particles for forming a three-dimensional object (Comparative Example 2).

(Comparative Example 3)

<Production of first particles (Comparative Example 3)>

After sintering a polybutyrene terephthalate (PBT) resin including 15% of GF (product name: Novaduran5010G15, available from Mitsubishi Engineering-Plastics Corporation) at a temperature higher than the melting point of the PBT by 30°C, a resin solution for forming a three-dimensional object was stretched into fibers by means of an extrusion device having a circular nozzle opening shape (available from The Japan Steel Works, LTD.). At the time of stretching, the fibers were broken and first particles (Comparative Example 3) could not be obtained.

<Production of second particles (Comparative Example 3)>

Second particles were not used in Comparative Example 3.

(Examples 1 to 8 and Comparative Examples 1 to 3)

Using the obtained resin particles for forming a three-dimensional object of Examples and Comparative Examples, measurements of properties of the resin particles and evaluation of quality of an object were performed in the following manner.
The results are presented n Tables 1-1 and 1-2 below.

[Volume average particle diameter Dv]

Volume average particle diameters Dv ($\mu$m) of the first particles and the second particles in the resin particles for forming a three-dimensional object were each measured by means of a particle size distribution measuring device (microtrac MT3300EXII, available from MicrotracBEL Corp.). The measurement was performed according to a dry (atmospheric) method using a refractive index of particles for each resin particles, without using a solvent.

[Shapes of particles]

A photograph of each of the first particles and second particles of the obtained resin particles for forming a three-dimensional object was taken by SEM (scanning electron microscope JSM-7800FPRIME, available from JEOL Ltd.) with the magnification of 150 times. Among the resin particles for forming a three-dimensional object in the obtained SEM image, a shape of the particle that had a first surface, a second surface, and a side surface, and had a circumferential region of the first surface and an outer circumferential region of the second surface, where the entire outer circumferential region of the first surface and the entire outer circumferential region of the second surface were extended along the side surfaces was determined as a columnar shape.

<Molding quality>

[Production of test specimen (formed product)]

The obtained resin particles for forming a three-dimensional object were added to a supply bed of an SLS-system forming device (AM S5500P, available from Ricoh Company Limited) and production of a three-dimensional object was performed. As the setting conditions, a layer average thickness was set to 0.1 mm, laser output was set to 10 W or greater but 150 W or less, and a laser scanning space was set to 0.1 mm, and a temperature lower than the melting point by 3°C was used as a floor temperature of the parts. By means of the SLS-system forming device, 5 test specimens (XY formed products) whose long sides faced the XY planar direction (a planar direction along which the roller 12 moved in FIG. 5) were formed in the center part of the laser scanning space 13.

A gap between the formed products was 5 mm or greater. The tensile test specimens were each an ISO (the International Organization for Standardization) 3167 Type 1A multipurpose dog-born-shaped test specimen (specimen had a center portion having a length of 80 mm, a thickness of 4 mm, and a width of 10 mm). The forming time was set to 50 hours.

[Precision]

A width length of each of the obtained 5 test specimens was measured on 5 points and an average value of the width length was calculated. Then, a variation between the calculated average value and the target width length was measured according to the following formula.

$$\text{Precision (mm)} = \text{average value of width (mm)} - 10 \text{ mm}$$

[Strength]

"Bending strength" of the obtained 5 test specimens was measured by means of a tensile strength tester (AGS-5kN, available from Shimadzu Corporation) according to ISO 527. An average value of the measured values was determined as strength [MPa].

Note that, the tensile test speed was set to 10 mm/min.

Table 1-1

| | | | | | | |
|---|---|---|---|---|---|---|
| | Structure of resin for use | | | | | |
| | First particles | | | | | |
| | Resin | Filler | Filler content % | Shape | Particle diameter $\mu$m | Structure ratio % |
| Ex. 1 | PBT | NA | 0 | Columnar | 80 | 50.0 |
| Ex. 2 | PBT | NA | 0 | Columnar | 80 | 60.0 |
| Ex. 3 | PBT | NA | 0 | Columnar | 80 | 60.0 |
| Ex. 4 | PBT | NA | 0 | Columnar | 80 | 60.0 |

(continued)

| | | Structure of resin for use | | | | |
|---|---|---|---|---|---|---|
| | | First particles | | | | |
| | Resin | Filler | Filler content % | Shape | Particle diameter $\mu$m | Structure ratio % |
| Ex. 5 | PBT | GF | 5 | Columnar | 80 | 70.0 |
| Ex. 6 | PBT | GF | 5 | Columnar | 80 | 80.0 |
| Ex. 7 | PBT | GF | 5 | Columnar | 80 | 90.0 |
| Ex. 8 | PBT | NA | 0 | Columnar | 80 | 60.0 |
| Comp. Ex. 1 | - | - | 0 | - | - | 0.0 |
| Comp. Ex. 2 | PBT | NA | 0 | Columnar | 80 | 85.0 |
| Comp. Ex. 3 | PBT | GF | 10 | | | 100.0 |

Table 1-2

| | | Structure of resin for use | | | | | | Evaluation | |
|---|---|---|---|---|---|---|---|---|---|
| | | Second particles | | | | | Filler content of formed product | Forming quality | |
| | Resin | Filler | Filler content % | Shape | Particle diameter $\mu$m | Structure ratio % | | Precision | Bending strength Mpa |
| Ex. 1 | PBT | GF | 15 | Non-columnar | 80 | 50.0 | 7.5% | 0.7 | 111 |
| Ex. 2 | PBT | GF | 15 | Non-columnar | 80 | 40.0 | 6.0% | 0.6 | 104 |
| Ex. 3 | PBT | GF | 30 | Non-columnar | 80 | 40.0 | 12.0% | 0.4 | 132 |
| Ex. 4 | PBT | GF | 45 | Non-columnar | 80 | 40.0 | 18.0% | 0.3 | 157 |
| Ex. 5 | PBT | GF | 45 | Non-columnar | 80 | 30.0 | 17.0% | 0.2 | 153 |
| Ex. 6 | PBT | GF | 45 | Non-columnar | 80 | 20.0 | 13.0% | 0.1 | 135 |
| Ex. 7 | PBT | GF | 45 | Non-columnar | 80 | 10.0 | 9.0% | 0.1 | 128 |
| Ex. 8 | PBT | GF | 45 | Non-columnar | 40 | 40.0 | 18.0% | 0.1 | 160 |
| Comp. Ex. 1 | PBT | GF | 15 | Non-columnar | 40 | 100.0 | 15.0% | 0.90 | 95 |
| Comp. Ex. 2 | NA | GF | 100 | - | | 15.0 | 15.0% | 1.50 | 85 |
| Comp. Ex. 3 | | | 0 | | | 0.0 | 10.0% | Could not be evaluated as powder could not be produced | |

**Claims**

1. Resin particles for forming a three-dimensional object, the resin particles comprising:

   first thermoplastic resin particles that are columnar particles; and
   second thermoplastic resin particles that are non-columnar particles,
   wherein the first thermoplastic resin particles and the second thermoplastic resin particles comprise inorganic filler, and
   wherein the columnar shape is a shape including a first surface (22), a second surface (23), and a side surface (24),
   and is a shape where an outer circumferential region (22b) of the first surface (22) and an outer circumferential region (23b) of the second surface (23) are both extended along the side surface (24), wherein
   the inorganic filler content of the first thermoplastic resin particles is 5% by mass or less,
   the inorganic filler content of the second thermoplastic resin particles is 10% by mass or greater, and
   the inorganic filler for the second thermoplastic resin particles is a reinforcing agent.

2. The resin particles according to claim 1,
   wherein the inorganic filler content of the second thermoplastic resin particles is 30% by mass or greater.

3. The resin particles according to claim 1 or 2,
   wherein a blending mass ratio between the first thermoplastic resin particles and the second thermoplastic resin particles is from 9/1 through 5/5.

4. The resin particles according to any one of claims 1 to 3,
   wherein a volume average particle diameter of the second thermoplastic resin particles is smaller than a volume average particle diameter of the first thermoplastic resin particles.

5. An apparatus (1) for producing a three-dimensional object, the apparatus (1) comprising:

   a supply unit (11) containing resin particles (P) for forming a three-dimensional object, where the supply unit (11) is configured to supply resin particles (P) for forming a three-dimensional object,
   wherein the apparatus (1) is configured to laminate cured layers of the resin particles (P) for forming a three-dimensional object to form a three-dimensional object,
   the resin particles (P) include first thermoplastic resin particles that are columnar particles, and second thermoplastic resin particles that are non-columnar particles,
   wherein the first thermoplastic resin particles and the second thermoplastic resin particles comprise inorganic filler, and
   wherein the columnar shape is a shape including a first surface (22), a second surface (23), and a side surface (24),
   and is a shape where an outer circumferential region (22b) of the first surface (22) and an outer circumferential region (23b) of the second surface (23) are both extended along the side surface (24), wherein
   the inorganic filler content of the first thermoplastic resin particles is 5% by mass or less,
   the inorganic filler content of the second thermoplastic resin particles is 10% by mass or greater, and
   the inorganic filler for the second thermoplastic resin particles is a reinforcing agent.

6. A method for producing a three-dimensional object, the method comprising:

   laminating cured layers of resin particles (P) for forming a three-dimensional object,
   wherein the resin particles (P) for forming a three-dimensional object include first thermoplastic resin particles that are columnar particles; and
   second thermoplastic resin particles that are non-columnar particles,
   wherein the first thermoplastic resin particles and the second thermoplastic resin particles comprise inorganic filler, and
   wherein the columnar shape is a shape including a first surface (22), a second surface (23), and a side surface (24),
   and is a shape where an outer circumferential region (22b) of the first surface (22) and an outer circumferential region (23b) of the second surface (23) are both extended along the side surface (24), wherein
   the inorganic filler content of the first thermoplastic resin particles is 5% by mass or less,

the inorganic filler content of the second thermoplastic resin particles is 10% by mass or greater, and
the inorganic filler for the second thermoplastic resin particles is a reinforcing agent.

7. Resin particles comprising:

first thermoplastic resin particles that are columnar particles; and
second thermoplastic resin particles that are non-columnar particles,
wherein the first thermoplastic resin particles or the second thermoplastic resin particles, or both of the first and second thermoplastic resin particles comprise inorganic filler, and an inorganic filler content of the first thermoplastic resin particles is different from an inorganic filler content of the second thermoplastic resin particles,
wherein the columnar shape is a shape including a first surface (22), a second surface (23), and a side surface (24),
and is a shape where an outer circumferential region (22b) of the first surface (22) and an outer circumferential region (23b) of the second surface (23) are both extended along the side surface (24), wherein
the volume average particle diameter of the first thermoplastic resin particles and the volume average particle diameter of the second thermoplastic resin particles are 5 $\mu$m or greater but 200 $\mu$m or less, and
the volume average particle diameter of the first thermoplastic resin particles is larger than the volume average particle diameter of the second thermoplastic resin particles.

**Patentansprüche**

1. Harzpartikel zum Bilden eines dreidimensionalen Objekts, wobei die Harzpartikel Folgendes umfassen:

erste thermoplastische Harzpartikel, die säulenförmige Partikel sind; und
zweite thermoplastische Harzpartikel, die nichtsäulenförmige Partikel sind,
wobei die ersten thermoplastischen Harzpartikel und die zweiten thermoplastischen Harzpartikel anorganischen Füllstoff umfassen; und
wobei die säulenförmige Gestalt eine Gestalt ist, die eine erste Oberfläche (22), eine zweite Oberfläche (23) und eine Seitenfläche (24) einschließt, und eine Gestalt ist, worin eine äußere zirkumferentielle Region (22b) der ersten Oberfläche (22) und eine äußere zirkumferentielle Region (23b) der zweiten Oberfläche (23) beide sich der Seitenfläche (24) entlang erstrecken,
wobei
der Gehalt an anorganischem Füllstoff der ersten thermoplastischen Harzpartikel 5 Masse-% oder weniger beträgt,
der Gehalt an anorganischem Füllstoff der zweiten thermoplastischen Harzpartikel 10 Masse- % oder mehr beträgt, und
der anorganische Füllstoff für die zweiten thermoplastischen Harzpartikel ein Verstärkungsmittel ist.

2. Harzpartikel nach Anspruch 1,
wobei der Gehalt an anorganischem Füllstoff der zweiten thermoplastischen Harzpartikel 30 Masse-% oder mehr beträgt.

3. Harzpartikel nach Anspruch 1 oder 2,
wobei ein Vermischungsmasseverhältnis zwischen den ersten thermoplastischen Harzpartikeln und den zweiten thermoplastischen Harzpartikeln 9/1 bis 5/5 beträgt.

4. Harzpartikel nach einem der Ansprüche 1 bis 3,
wobei ein volumendurchschnittlicher Partikeldurchmesser der zweiten thermoplastischen Harzpartikel geringer als ein volumendurchschnittlicher Partikeldurchmesser der ersten thermoplastischen Harzpartikel ist.

5. Vorrichtung (1) für die Herstellung eines dreidimensionalen Objekts, wobei die Vorrichtung (1) Folgendes umfasst:

eine Liefereinheit (11) enthaltend Harzpartikel (P) zum Bilden eines dreidimensionalen Objekts, wobei die Liefereinheit (11) zum Liefern von Harzpartikeln (P) zum Bilden eines dreidimensionalen Objekts konfiguriert ist,
wobei die Vorrichtung (1) zum Laminieren von ausgehärteten Schichten der Harzpartikel (P) zum Bilden eines dreidimensionalen Objekts konfiguriert ist, um ein dreidimensionales Objekt zu bilden,
die Harzpartikel (P) erste thermoplastische Harzpartikel, die säulenförmige Partikel sind, und zweite thermoplastische Harzpartikel, die nichtsäulenförmige Partikel sind, einschließen,

wobei die ersten thermoplastischen Harzpartikel und die zweiten thermoplastischen Harzpartikel anorganischen Füllstoff umfassen, und

wobei die säulenförmige Gestalt eine Gestalt ist, die eine erste Oberfläche (22), eine zweite Oberfläche (23) und eine Seitenfläche (24) einschließt und eine Gestalt ist, worin eine äußere zirkumferentielle Region (22b) der ersten Oberfläche (22) und eine äußere zirkumferentielle Region (23b) der zweiten Oberfläche (23) sich beide der Seitenfläche (24) entlang erstrecken,

wobei

der Gehalt an anorganischem Füllstoff der ersten thermoplastischen Harzpartikel 5 Masse-% oder weniger beträgt,

der Gehalt an anorganischem Füllstoff der zweiten thermoplastischen Harzpartikel 10 Masse- % oder mehr beträgt, und

der anorganische Füllstoff für die zweiten thermoplastischen Harzpartikel ein Verstärkungsmittel ist.

6. Verfahren für die Herstellung eines dreidimensionalen Objekts, wobei das Verfahren Folgendes umfasst:

Laminieren von ausgehärteten Schichten von Harzpartikeln (P) zum Bilden eines dreidimensionalen Objekts, wobei die Harzpartikel (P) zum Bilden eines dreidimensionalen Objekts erste thermoplastische Harzpartikel, die säulenförmige Partikel sind, und zweite thermoplastische Harzpartikel, die nichtsäulenförmige Partikel sind, einschließen,

wobei die ersten thermoplastischen Harzpartikel und die zweiten thermoplastischen Harzpartikel anorganischen Füllstoff umfassen, und

wobei die säulenförmige Gestalt eine Gestalt ist, die eine erste Oberfläche (22), eine zweite Oberfläche (23) und eine Seitenfläche (24) einschließt und eine Gestalt ist, worin eine äußere zirkumferentielle Region (22b) der ersten Oberfläche (22) und eine äußere zirkumferentielle Region (23b) der zweiten Oberfläche (23) sich beide der Seitenfläche (24) entlang erstrecken,

wobei

der Gehalt an anorganischem Füllstoff der ersten thermoplastischen Harzpartikel 5 Masse-% oder weniger beträgt,

der Gehalt an anorganischem Füllstoff der zweiten thermoplastischen Harzpartikel 10 Masse- % oder mehr beträgt, und

der anorganische Füllstoff für die zweiten thermoplastischen Harzpartikel ein Verstärkungsmittel ist.

7. Harzpartikel umfassend:

erste thermoplastische Harzpartikel, die säulenförmige Partikel sind; und

zweite thermoplastische Harzpartikel, die nichtsäulenförmige Partikel sind,

wobei die ersten thermoplastischen Harzpartikel oder die zweiten thermoplastischen Harzpartikel oder beide von den ersten und zweiten thermoplastischen Harzpartikeln anorganischen Füllstoff umfassen, und

ein Gehalt an anorganischem Füllstoff der ersten thermoplastischen Harzpartikel von einem Gehalt an anorganischem Füllstoff der zweiten thermoplastischen Harzpartikel verschieden ist,

wobei die säulenförmige Gestalt eine Gestalt ist, die eine erste Oberfläche (22), eine zweite Oberfläche (23) und eine Seitenfläche (24) einschließt und eine Gestalt ist, worin eine äußere zirkumferentielle Region (22b) der ersten Oberfläche (22) und eine äußere zirkumferentielle Region (23b) der zweiten Oberfläche (23), sich beide der Seitenfläche (24) entlang erstrecken,

wobei

der volumendurchschnittliche Partikeldurchmesser der ersten thermoplastischen Harzpartikel und der volumendurchschnittliche Partikeldurchmesser der zweiten thermoplastischen Harzpartikel 5 $\mu$m oder mehr, jedoch 200 $\mu$m oder weniger betragen, und

der volumendurchschnittliche Partikeldurchmesser der ersten thermoplastischen Harzpartikel größer ist als der volumendurchschnittliche Partikeldurchmesser der zweiten thermoplastischen Harzpartikel.

## Revendications

1. Particules de résine pour former un objet tridimensionnel, les particules de résine comprenant :

des premières particules de résine thermoplastique qui sont des particules colonnaires ; et

des deuxièmes particules de résine thermoplastique qui sont des particules non colonnaires ;
dans lesquelles les premières particules de résine thermoplastique et les deuxièmes particules de résine thermoplastique comprennent un agent de remplissage inorganique ; et
dans lesquelles la forme colonnaire est une forme qui inclut une première surface (22), une deuxième surface (23) et une surface latérale (24), et est une forme où une région circonférentielle externe (22b) de la première surface (22) et une région circonférentielle externe (23b) de la deuxième surface (23) s'étendent toutes deux le long de la surface latérale (24) ;
dans lesquelles :

la teneur en agent de remplissage inorganique des premières particules de résine thermoplastique est de 5 % en masse ou moins ;
la teneur en agent de remplissage inorganique des deuxièmes particules de résine thermoplastique est de 10 % en masse ou plus; et
l'agent de remplissage inorganique pour les deuxièmes particules de résine thermoplastique est un agent de renforcement.

2. Particules de résine selon la revendication 1,
dans lesquelles la teneur en agent de remplissage inorganique des deuxièmes particules de résine thermoplastique est de 30 % en masse ou plus.

3. Particules de résine selon la revendication 1 ou 2,
dans lesquelles un rapport en masse de mélange entre les premières particules de résine thermoplastique et les deuxièmes particules de résine thermoplastique va de 9/1 à 5/5.

4. Particules de résine selon l'une quelconque des revendications 1 à 3,
dans lesquelles un diamètre de particule moyen en volume des deuxièmes particules de résine thermoplastique est inférieur à un diamètre de particule moyen en volume des premières particules de résine thermoplastique.

5. Appareil (1) pour fabriquer un objet tridimensionnel, l'appareil (1) comprenant :

une unité d'alimentation (11) qui contient des particules de résine (P) pour former un objet tridimensionnel, dans lequel l'unité d'alimentation (11) est configurée pour fournir des particules de résine (P) pour former un objet tridimensionnel ;
dans lequel l'appareil (1) est configuré pour stratifier des couches durcies des particules de résine (P) pour former un objet tridimensionnel pour former un objet tridimensionnel ;
les particules de résine (P) incluent des premières particules de résine thermoplastique qui sont des particules colonnaires et des deuxièmes particules de résine thermoplastique qui sont des particules non colonnaires ;
dans lequel les premières particules de résine thermoplastique et les deuxièmes particules de résine thermoplastique comprennent un agent de remplissage inorganique ; et
dans lequel la forme colonnaire est une forme qui inclut une première surface (22), une deuxième surface (23) et une surface latérale (24), et est une forme où une région circonférentielle externe (22b) de la première surface (22) et une région circonférentielle externe (23b) de la deuxième surface (23) s'étendent toutes deux le long de la surface latérale (24) ;
dans lequel :

la teneur en agent de remplissage inorganique des premières particules de résine thermoplastique est de 5 % en masse ou moins ;
la teneur en agent de remplissage inorganique des deuxièmes particules de résine thermoplastique est de 10 % en masse ou plus; et
l'agent de remplissage inorganique pour les deuxièmes particules de résine thermoplastique est un agent de renforcement.

6. Procédé permettant de fabriquer un objet tridimensionnel, le procédé comprenant :

la stratification de couches durcies de particules de résine (P) pour former un objet tridimensionnel ;
dans lequel les particules de résine (P) pour former un objet tridimensionnel incluent des premières particules de résine thermoplastique qui sont des particules colonnaires et des deuxièmes particules de résine thermoplastique qui sont des particules non colonnaires ;

23

dans lequel les premières particules de résine thermoplastique et les deuxièmes particules de résine thermoplastique comprennent un agent de remplissage inorganique ; et

dans lequel la forme colonnaire est une forme qui inclut une première surface (22), une deuxième surface (23) et une surface latérale (24), et est une forme où une région circonférentielle externe (22b) de la première surface (22) et une région circonférentielle externe (23b) de la deuxième surface (23) s'étendent toutes deux le long de la surface latérale (24) ;

dans lequel :

la teneur en agent de remplissage inorganique des premières particules de résine thermoplastique est de 5 % en masse ou moins ;

la teneur en agent de remplissage inorganique des deuxièmes particules de résine thermoplastique est de 10 % en masse ou plus; et

l'agent de remplissage inorganique pour les deuxièmes particules de résine thermoplastique est un agent de renforcement.

7. Particules de résine comprenant :

des premières particules de résine thermoplastique qui sont des particules colonnaires ; et

des deuxièmes particules de résine thermoplastique qui sont des particules non colonnaires ;

dans lesquelles les premières particules de résine thermoplastique ou les deuxièmes particules de résine thermoplastique ou à la fois les premières et les deuxièmes particules de résine thermoplastique comprennent un agent de remplissage inorganique ; et

une teneur en agent de remplissage inorganique des premières particules de résine thermoplastique est différente d'une teneur en agent de remplissage inorganique des deuxièmes particules de résine thermoplastique ;

dans lesquelles la forme colonnaire est une forme qui inclut une première surface (22), une deuxième surface (23) et une surface latérale (24), et est une forme où une région circonférentielle externe (22b) de la première surface (22) et une région circonférentielle externe (23b) de la deuxième surface (23) s'étendent toutes deux le long de la surface latérale (24) ;

dans lesquelles :

le diamètre de particule moyen en volume des premières particules de résine thermoplastique et le diamètre de particule moyen en volume des deuxièmes particules de résine thermoplastique sont supérieurs ou égaux à 5 $\mu$m et inférieurs ou égaux à 200 $\mu$m; et

le diamètre de particule moyen en volume des premières particules de résine thermoplastique est supérieur au diamètre de particule moyen en volume des deuxièmes particules de résine thermoplastique.

FIG. 1

FIG. 2

FIG. 3

FIG. 4A

FIG. 4B

FIG. 4C

FIG. 4D

FIG. 4E

FIG. 4F

FIG. 4G

FIG. 4H

FIG. 4I

FIG. 5

FIG. 6A

FIG. 6B

FIG. 7A

FIG. 7B

**EP 3 560 685 B1**

**Patent documents cited in the description**

- WO 2017112723 A
- JP 2006321711 A
- EP 3272787 A1
- WO 2018057844 A
- US 6531086 B